# EUROPÄISCHE PATENTSCHRIFT

(11) **EP 1 229 263 B1**
(45) Veröffentlichungstag und Bekanntmachung des Hinweises auf die Patenterteilung: **28.03.2007**
(21) Anmeldenummer: 01102304.1
(22) Anmeldetag: 01.02.2001
(51) Int. Cl.: F16D 23/06

(54) **Synchronisiereinrichtung**
Synchronizer
Dispositif de synchronisation

(43) Veröffentlichungstag der Anmeldung: 07.08.2002
(73) Patentinhaber: Ford Global Technologies, LLC, Dearborn, MI 48126 (US)
(72) Erfinder: Dahl, Peter, 51515 Kuerten (DE); Pitz, Juergen, 47533 Kleve (DE); Frankenberg, Dietmar, 50829 Koeln (DE)
(74) Vertreter: Drömer, Hans-Carsten

(56) Entgegenhaltungen:
- DE-C- 19 580 558
- US-A- 4 378 710
- US-A- 4 475 639
- US-A- 4 687 081

## Beschreibung

Die Erfindung bezieht sich auf eine Synchronisiereinrichtung der im Oberbegriff des Patentanspruches 1 erläuterten Art.

Bei üblichen Synchronisiereinrichtungen sind die Schiebemuffen auf dem Synchronkörper axial in beide Richtungen verschiebbar, um die jeweiligen Kupplungen schalten zu können. Wenn die Schiebemuffe in Neutralstellung ist, wird die Muffe durch eine geeignete Einrichtung in dieser Stellung auf dem Synchronkörper zentriert, damit unbeabsichtigte Bewegungen der Schiebemuffe auf dem Synchronkörper, ausgelöst durch Schwingungen oder Beschleunigungskräfte, nicht die Synchronisierung betätigen. Aus der US 5560461 ist eine Zentrierung für die Schiebemuffe durch federbelastete Rastkugeln bekannt. Die im Synchronkörper eingelassenen, federbelasteter Rastkugeln zentrieren die Schiebemuffe selbsttätig, sobald die Schiebemuffe in die Neutralstellung geschoben wird, indem die Rastkugeln in Neutralstellung in Ausnehmungen in der Schiebemuffe eingreifen.

Neben dieser Zentrieranordnung werden in der Schiebemuffe noch die ebenfalls federbelasteten Druckstücke, die auf die Synchronringe drücken, benötigt. Insgesamt ergibt sich damit bei der Fertigung ein hoher Montageaufwand für die Baueinheit Synchronkörper/Schiebemuffe, da alle Einzelteile wie Federn, Kugeln und Druckstücke aufwendig an den entsprechenden Stellen gehalten werden müssen.

Aus der DE 195 80 558 ist eine Synchronisiereinrichtung bekannt, die nur einen geringen Montageaufwand für die Druckstücke benötigt. Ein Druckstück bildet mit einer Druckfeder und einem Rastelement eine Baueinheit, so daß bei der Montage der Synchronisiereinrichtung lediglich die vormontierten Druckstücke an die entsprechenden Ausnehmungen im Synchronkörper verbracht werden.

Bei einer derartigen Anordnung ist keine Zentriervorrichtung für die Schiebemuffe vorgesehen. Die Zentrierung erfolgt mit separaten Einrichtungen, entweder durch Zentrierung der Schaltgabel oder durch entsprechende Rastkugeln wie bereits oben beschrieben. Die Lösung mit den Rastkugeln bedeutet wieder einen erhöhten Montageaufwand. Die zentrierte Schaltgabel ist in der Positionierung ungenau, da zwischen Schaltvorrichtung und Synchroneinrichtung viele Toleranzen und Ausdehnungen durch Wärme und Belastungen zu berücksichtigen sind. Entsprechen muß der Schaltweg der Schiebemuffe großzügig dimensioniert werden, damit es nicht zu einer unbeabsichtigten Betätigung der Synchronisierung aufgrund der ungenauen Ausrichtung der Schiebemuffe in Neutralstellung kommt.

Aufgabe der Erfindung ist es demnach, eine Synchronisiereinrichtung zu schaffen, die bei kompakter Bauweise von Schiebemuffe und Synchronkörper einen geringen Aufwand bei der Montage benötigt.

Gelöst wird die Aufgabe durch die kennzeichnenden Merkmale des Anspruches 1. Weitere, die Erfindung vorteilhaft ausgestaltende Merkmale sind in den Unteransprüchen aufgeführt.

Dadurch, daß mindestens ein Druckstück eine nach radial innen weisende Zentrierlagerung aufweist, die durch im stumpfen Winkel zueinander angeordnete Anlageflächen gebildet ist, kann die Funktion der axialen Zentrierung der Schiebemuffe auf dem Synchronkörper von dem vormontierten Druckstück übernommen werden. In Neutralstellung der Synchronisiereinrichtung greift die Zentrierlagerung in eine am Synchronkörper angeordnete Ausnehmung ein.

Bei einer Verschiebung der Schiebemuffe gegenüber dem Synchronkörper aus der Neutralstellung wird das Rastelement des Druckstücks, daß in die Ausnehmung in der Schiebemuffe greift, mit der Schiebemuffe mitbewegt, während die Zentrierlagerung in der Ausnehmung im Synchronkörper verbleibt. Durch diese relative Verschiebung des Druckstückes zwischen Rastelement und Zentrierlagerung kippt das Druckstück. Die Zentrierlagerung ist so ausgeführt, daß bei der Kippbewegung des Druckstückes dieses eine Bewegung in radialer Richtung nach außen in Richtung Schiebemuffe erfährt. Die Folge ist, daß die Zentrierlagerung nur auf der in axialer Verschieberichtung der Schiebemuffe gesehenen Seite aufliegt. Weiterhin resultiert eine Verschiebung des Rastelementes in das Druckstück mit der Folge, das die Druckfeder stärker gedrückt wird und damit eine leichte Erhöhung der Federkraft einhergeht.

Durch die resultierenden Kräfte zwischen einseitiger Auflage der Zentrierlagerung und der erhöhten Rastkraft am Rastelement bildet sich ein entgegen der Bewegungsrichtung der Schiebemuffe wirkendes Rückstellmoment aus, welches das Druckstück in die Ausgangslage bzw. Neutralstellung führt. Da die Schiebemuffe über ihre Ausnehmung durch das Rastelement mitgeführt ist, bewegt sich die Schiebemuffe ebenfalls in die Neutralstellung.

Während der ordnungsgemäßen Betätigung der Synchronisiereinrichtung, wenn die Schiebemuffe in Richtung eines der Synchronringpakete verschoben wird, ist nur während einer sehr kurzen Dauer, wenn die Schiebemuffe aus der Neutralstellung verschoben wird, die Zentrierkraft wirksam. Sobald die Zentrierlagerung des Druckstückes nicht mehr in die Ausnehmung auf dem Synchronkörper greift, entsteht kein Rückstellmoment und das Druckstück verhält sich wie das aus der DE 195 80 558 bekannte Druckstück.

Eine vorteilhafte Ausgestaltung der Erfindung sieht vor, daß die Anlageflächen der Zentrierlagerung zumindest abschnittsweise eine Kegelform aufweisen. Die erfindungsgemäße Funktion der Zentrierlagerung wird durch diese Ausführung ebenfalls erfüllt. Wesentlicher Vorteil ist die einfache Fertigung der Zentrierlagerung, z.B. durch Drehen eines Kegels am Druckstück. Aber auch bei anderen Fertigungsverfahren wie z.B. Sintern ist die Herstellung durch die einfache Formgebung des Druckstückes erleichtert.

Eine weitere vorteilhafte Ausgestaltung der Erfindung sieht vor, daß bei kegelförmiger Ausformung der Anlageflächen der Zentrierlagerung die Ausnehmung am Synchronkörper einen zumindest abschnittsweise kreisförmigen Rand aufweist. Hier ist ebenfalls die erfindungsgemäße Funktion der Zentrierlagerung erfüllt; wesentlicher Vorteil ist die einfache Fertigung der Ausnehmung im Synchronkörper durch Bohren oder Ansenken.

Eine weitere Ausführung sieht vor, daß die Zentrierlagerung zumindest teilweise die Form eines Abschnittes einer Zylinderwalze aufweist, wodurch die Anlageflächen des Druckstückes als Teilflächen eines Zylindermantels ausgeführt sind. Ein derartiges Druckstück weist die gleiche Funktion wie ein Druckstück mit ebenen Anlageflächen auf. Vorteilhaft ist hier, das bei der Verschiebung des Druckstückes beim Synchronisieren, wenn die Zentrierlagerung nicht mehr in die Ausnehmung im Synchronkörper greift, ein Kippen des Druckstückes in der Führungsnut keine wesentliche Veränderung der Federkräfte bewirkt, da bei geeigneter Einstellung des Radius der Zylinderwalze kaum eine Höhenänderung der Federauflage im Druckstück - relativ zur Schiebemuffe - resultiert.

Eine weitere vorteilhafte Ausführung der Erfindung sieht vor, daß die Ausnehmung im Synchronkörper zwei Auflageflächen aufweist, wobei die erste Auflagefläche parallel der einen Anlagefläche des Druckstückes und die zweite Auflagefläche parallel der anderen Anlagefläche ist. Damit ergeben sich zwei schiefe Ebenen, auf denen das Druckstück sich in axialer Richtung bewegen kann. Die Neigung der beiden schiefen Ebenen, die nicht gleich sein müssen, ist dabei so gewählt, daß sie größer sind als der Haftreibungswinkel zwischen Zentrierlagerung des Druckstückes und Ausnehmung im Synchronkörper. Dann rutscht das Druckstück immer, wenn keine Verschiebekraft auf die Schiebemuffe aufgebracht wird, bedingt durch die Federkraft in die Mittelstellung zurück und zentriert damit auch die Schiebemuffe, welche über die Rastelement mit dem Druckstück mitgeführt wird. Bei dieser Ausführung kippt das Druckstück beim Synchronisieren nicht, sondern wird lediglich in Richtung entweder der einen oder der anderen Anlagefläche axial verschoben.

Das Funktionsprinzip und weitere vorteilhafte Ausgestaltungen der Erfindung sind den folgenden Zeichnungen zu entnehmen. Es zeigen
- Fig. 1: die Synchronisiereinrichtung mit Schiebemuffe in Neutralstellung;
- Fig. 2: die Synchronisiereinrichtung mit Schiebemuffe, verschoben aus der Neutralstellung und mit gekipptem Druckstück;
- Fig. 3: eine vergrößerte Detailansicht des gekippten Druckstückes;
- Fig. 4: die Synchronisiereinrichtung mit Schiebemuffe in Synchronisierstellung; und
- Fig. 5: die Synchronisiereinrichtung mit Schiebemuffe im Schaltstellung.

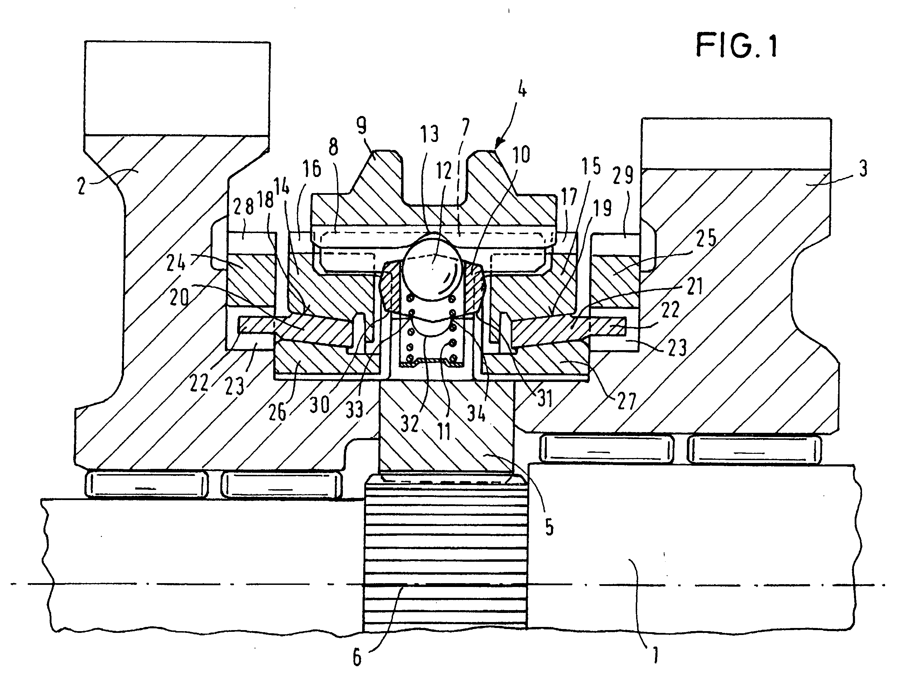

Fig. 1 zeigt eine Welle 1, auf welcher zwei Losräder 2 und 3 frei drehbar gelagert sind. Zwischen den beiden Losrädern ist die Synchronisiereinrichtung 4 angeordnet, über welche wahlweise eines der beiden Losräder 2 oder 3 an die Welle 1 schaltbar ist. Auf diese Weise wird das Schaltgetriebe in unterschiedliche Übersetzungsstufen geschaltet.

Die Synchronisiereinrichtung 4 weist einen Synchronkörper 5 auf, der drehfest in eine Verzahnung 6 der Welle 1 eingreift. Weiterhin ist der Synchronkörper 5 an seinem äußeren Umfang mit einer Außenverzahnung 7 versehen, in welche eine Innenverzahnung 8 einer Schiebemuffe 9 eingreift. Im Synchronkörper 5 ist weiterhin ein Druckstück 10 geführt, welches in seinem Inneren eine Druckfeder 11 und ein kugelförmiges, in Längsrichtung über das Druckstück 10 vorstehende Rastelement 12 aufnimmt. In Neutralstellung der Synchronisiereinrichtung 4, in der keine der beiden möglichen Gangstufen geschaltet ist und somit die beiden Losräder 2 und 3 frei gegenüber der Welle 1 drehen, greift das Rastelement 12 in eine in der Innenverzahnung 8 der Schiebemuffe 9 ausgebildeten Ausnehmung 13 ein.

Beiderseits des Druckstückes 10 sind Synchronringe 14 und 15 angeordnet, die außen eine Sperrverzahnung 16 bzw. 17 und innen eine Reibfläche 18 bzw. 19 aufweisen. Die Reibflächen 18 und 19 der Synchronringe 14 und 15 wirken zusammen mit entsprechend ausgebildeten Reibflächen auf den Konusringen 20 und 21. Die Konusringe 20 und 21 sind über axial ausgebildete Zapfen 22, die in Ausnehmungen 23 der Kupplungsringe 24 und 25 eingreifen, drehfest mit den Kupplungsringen 24 bzw. 25 verbunden, und diese wiederum sind fest mit den Losrädern 2 bzw. 3 verbunden. An ihrem Innenumfang wirken die Konusringe 20 und 21 auf konusförmige Reibringe 26 bzw. 27, die drehfest mit dem jeweiligen Synchronring 14 bzw. 15 verbunden sind.

Weiterhin weisen die Kupplungsringe 24 und 25 eine Kupplungsverzahnung 28 bzw. 29 auf, die mit der Innenverzahnung 8 der Schiebemuffe 9 korrespondieren und über die Losräder bei Verschieben der Schiebemuffe 9 über die Verzahnung 28 bzw. 29 die entsprechenden Losräder 2 bzw. 3 mit der Welle 1 gekuppelt werden.

Die erfindungsgemäße Zentrierlagerung wird gebildet durch zwei Anlageflächen 30 und 31, die radial innen am Druckstück 10 im stumpfen Winkel zueinander angeordnet sind und die in eine Ausnehmung 32 im Synchronkörper 5 eingreifen. In der bevorzugten Ausführung ist der stumpfe Winkel, der vorzugsweise dach- oder kegelförmig ausgeführt ist, so angeordnet, daß die (gedankliche) Spitze in der - axial gesehen - Mitte des Druckstückes 10 liegt und die Spitze radial nach innen zeigt. Die beiden Anlageflächen 30 und 31 erstrecken sich dann - wieder axial gesehen - beidseitig der Mitte des Druckstückes 10. Der Andruck des Druckstückes 10 in die Ausnehmung 32 erfolgt über die Rastfunktion des Druckstückes: Die Druckfeder 11 drückt das Rastelement 12 in die Ausnehmung 13 in der Schiebemuffe 9. Die resultierende Gegenkraft drückt das Druckstück 10 in die Ausnehmung 32 im Synchronkörper 5. Durch die Anordnung der Zentrierflächen 30 und 31 und der Ausnehmung 32 im Synchronkörper 5 ergeben sich, in axialer Richtung gesehen, zwischen Druckstück 10 und Synchronkörper 5 zwei Punktkontakte 33 und 34, jeweils einer auf den Zentrierflächen 30 und 31, wobei die Lage der Punktkontakte 33 bzw. 34 ungefähr am linken bzw. rechten Rand der Ausnehmung 32 im Synchronkörper 5 zu finden ist.

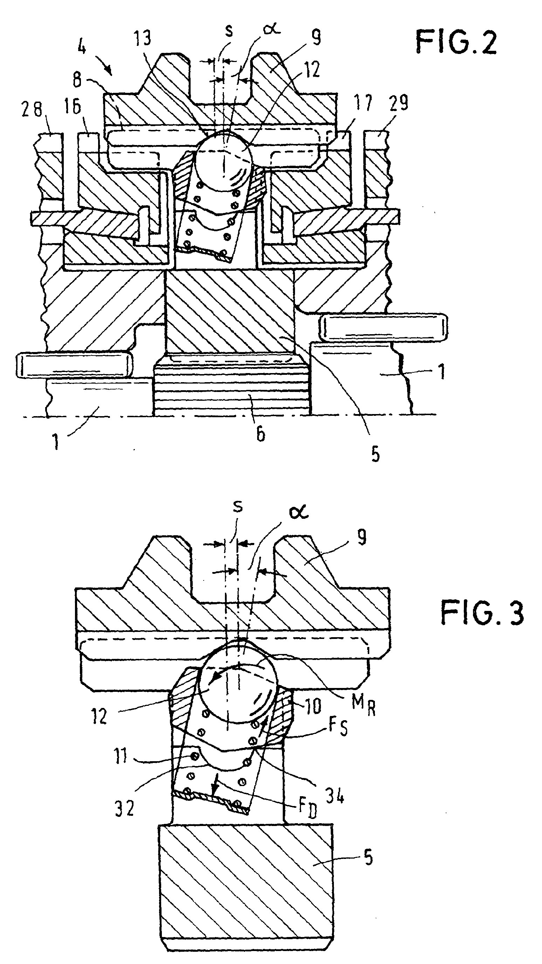

Die erfindungsgemäße Wirkung der Zentrierlagerung wird ersichtlich aus Figur 2. Bei Störungen wie Schwingungen oder auf die Schiebemuffe 9 wirkenden Beschleunigungskräften bewegt sich die Schiebemuffe 9 unbeabsichtigt um den kleinen Weg s in axialer Richtung aus der Neutralstellung heraus. Das Rastelement 12, welches in die Ausnehmung 13 in der Schiebemuffe 9 greift, erfährt die gleiche Verschiebung. Bedingt durch die Zentrierlagerung sitzt das Druckstück 10 im Bereich der Zentrierlagerung bei solchen kleinen Bewegungen axial unverrückbar in der Ausnehmung 32 des Synchronkörpers 5. Aufgrund dieser relativen Verschiebung des Druckstückes 10 zwischen Rastelement 12 und Zentrierlagerung kippt das Druckstück 10 wie in Figur 2 dargestellt um den Winkel α.

Eine vergrößerte Darstellung dieses Ablaufes ist in Figur 3 dargestellt. Aufgrund der Verschiebung der Schiebemuffe 9 um den Weg s kippt das Druckstück 10 um den Winkel α. Damit reduziert sich der Kontakt zwischen Druckstück 10 und Synchronkörper 5 auf den Punktkontakt 34 am Rand der Ausnehmung 32, der in Richtung der Verschiebung liegt.

Die Federkraft F_{D} der Druckfeder 11 erhöht sich gegenüber der Neutralstellung des Druckstückes leicht, da die Druckfeder bedingt durch die Ausformung der Zentrierlagerung sich verkürzt. Gleichzeit bildet sich ein Kräftepaar aus: In Achsrichtung der Verlängerung von Rastelementes 10 und Druckfeder 11 wirkt besagt Federkraft F_{D}. Parallel dazu wirkt eine Gegenkraft F_{S}, deren Wirklinie, da das Druckstück 10 radial innen nur am Punktkontakt 34 gestützt ist, durch denselben geht. Hieraus resultiert ein Rückstellmoment M_{R}, welches der Verschiebung s entgegenwirkt und welches erst aufgehoben ist, wenn die Schiebemuffe 9 sich wieder in Neutralstellung befindet und das Druckstück 10 mit der Zentrierlagerung beidseitigen Punktkontakt 33 und 34 hat.

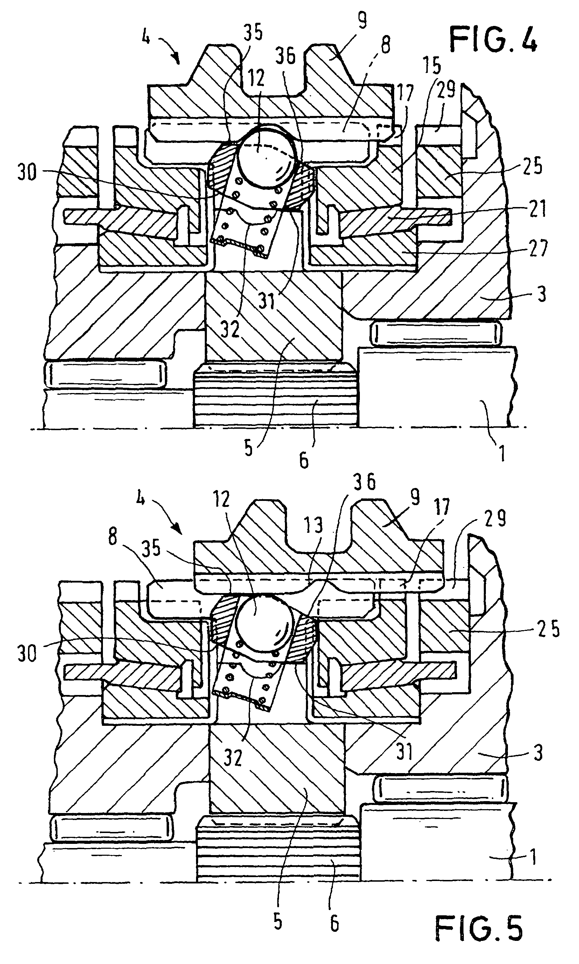

In Figur 4 ist das Druckstück 10 und die Schiebemuffe 9 in Synchronisierstellung gezeigt. Während eines Schaltvorganges wird die Schaltmuffe 9 aus der Neutralstellung bewegt, wozu die Rückstellkraft der Zentrierlagerung überwunden werden muß. Da die Rückstellkraft jedoch klein ist gegenüber den sonstigen Schaltkräften der Synchronisiereinrichtung 4, fällt dies beim Bedienen kaum auf. Bei einer bestimmten axialen Verschiebung der Schiebemuffe drückte das gekippte Druckstück 10 gegen den Synchronring 15, worauf dieser gegen den Konusring 21 und dieser wiederum gegen den konusförmigen Reibring 27 gedrückt wird. Dieser Vorgang der Synchronisierung dauert solange an, bis die Sperrverzahnung 17 den Weg für die Schiebemuffe 9 freigibt und die Innenverzahnung 8 der Schiebemuffe 9 in die Schaltverzahnung 29 des Kupplungsringes 25 geschoben werden kann.

Vorteilhafterweise sind die Abmessungen des Drückstückes 10 dabei so, daß beim Synchronisiervorgang die Anlagefläche 31 eben auf der Längsnut des Synchronkörpers 5 aufliegt, wodurch sich das Druckstück 10 leichter in der Längsnut verschieben läßt. Gleichzeitig wird durch die ebene Auflage bei einer weiteren axialen Verschiebung in die Schaltstellung die Funktion der Zentrierlagerung außer Kraft gesetzt, da kein Auflagepunkt existiert, um den sich ein Rückstellmoment ausbildet, welches die Schiebemuffe 9 in die Neutralstellung zurückführt.

Für eine verbesserte Verschiebbarkeit des gekippten Druckstückes 10 zwischen Synchronkörper und Schiebemuffe 9 weist das Druckstück 10 vorteilhafterweise zwei Gleitflächen 35 und 36 auf, die an der radial äußeren Kontaktfläche zwischen Druckstück 10 und Schiebemuffe 9 angeordnet sind und die die gleiche Neigung wie die Anlageflächen 30 und 31 aufweisen, wobei jeweils die radial inneren und äußeren Flächen, die in axialer Richtung entgegengesetzt am Druckstück 10 angeordnet sind, parallel sind, d. h. Anlagefläche 30 und Gleitfläche 36 sowie Anlagefläche 31 und Gleitfläche 35 sind jeweils parallel zueinander angeordnet.

In Figur 5 ist die Synchronisiereinrichtung 4 in Schaltstellung gezeigt: Die Innenverzahnung 8 der Schiebemuffe 9 greift in die Schaltverzahnung 29 des Kupplungsringes 25 und verbindet somit drehfest die Welle 1 mit dem Losrad 3. Beim endgültigen Einrückvorgang bleibt das Druckstück 10 axial gesehen vor dem Synchronring 15 stehen, während die Schiebemuffe 9 axial weiter über die Schaltverzahnung 29 geschoben wird. Dabei rastet das Rastelement 12 aus der Ausnehmung 13 der Schiebemuffe 9 aus. Gleichzeitig wird auch die Funktion der Zentrierlagerung ausgeschaltet, indem, wie bereits oben beschrieben, die Anlagefläche 31 eben in der Längsnut im Synchronkörper 5 aufliegt.

Erst beim Ausrücken, wenn die Schiebemuffe 9 in Neutralstellung geschoben wird, rastet das Rastelement 12 wieder in die Ausnehmung 13 ein, so daß das Druckstück 10 mit in die Neutralstellung geschoben wird. Dort greifen auch die beiden Anlageflächen 30 und 31 wieder in die Ausnehmung 32 des Synchronkörpers 5 und stellen damit die Funktion der Zentrierlagerung in der Neutralstellung wieder her.

## Patentansprüche

1. Synchronisiereinrichtung (4) für Schaltgetriebe mit einem drehfest auf einer Getriebewelle (1) angeordneten Synchronkörper (5), der am Umfang eine Außenverzahnung (7) und mehrere gleichmäßig verteilte Längsnuten aufweist, wobei in die Außenverzahnung (7) des Synchronkörpers (5) eine Innenverzahnung (8) einer Schiebemuffe (9) und in den Längsnuten Druckstücke (10) eingreifen, wobei über eine radial äußere Fläche eines jeden in den Synchronkörper (5) eingesetzten Druckstückes (10) ein durch eine Druckfeder (11) vorgespanntes, vorzugsweise kugelförmiges, mit einer Ausnehmung (13) der Schiebemuffe (9) zusammenwirkendes Rastelement (12) vorsteht, wobei Druckstück (19), Druckfeder (11) und Rastelement (12) eine bauliche Einheit bilden indem das Druckstück (10) Druckfeder (11) und Rastelement (12) zusammenhält, und wobei die Druckstücke (10) mit zumindest einem eine konische Reibfläche (18, 19) und eine Sperrverzahnung (16, 17) aufweisenden Synchronring (14, 15) zusammenwirken,
**dadurch gekennzeichnet, daß**
mindestens ein Druckstück (10) eine nach radial innen weisende Zentrierlagerung aufweist, die durch im stumpfen Winkel zueinander angeordnete Anlageflächen (30, 31) gebildet ist, wobei in Neutralstellung der Synchronisiereinrichtung (4) die Zentrierlagerung in eine am Synchronkörper (5) angeordnete Ausnehmung (32) greift.

2. Synchronisiereinrichtung nach Anspruch 1,
**dadurch gekennzeichnet, daß**
die Anlageflächen (30, 31) der Zentrierlagerung zumindest abschnittsweise eine Kegelform aufweisen.

3. Synchronisiereinrichtung nach Anspruch 2,
**dadurch gekennzeichnet, daß**
bei kegelförmiger Ausformung der Anlageflächen (30, 31) der Zentrierlagerung die Ausnehmung (32) am Synchronkörper einen zumindest abschnittsweise kreisförmigen Rand aufweist.

4. Synchronisiereinrichtung nach Anspruch 1,
**dadurch gekennzeichnet, daß**
am Druckstück (10) zwei Gleitflächen (35) und (36) an der radial äußeren Kontaktfläche zwischen Druckstück (10) und Schiebemuffe (9) angeordnet sind, die die gleiche Neigung wie die Anlageflächen (30) und (31) aufweisen, wobei jeweils die radial inneren und äußeren Flächen, die in axialer Richtung entgegengesetzt am Druckstück (10) angeordnet sind, parallel sind.

5. Synchronisiereinrichtung nach Anspruch 1,
**dadurch gekennzeichnet, daß**
die Zentrierlagerung zumindest teilweise die Form eines Abschnittes einer Zylinderwalze aufweist, wobei die Anlageflächen (30, 31) des Druckstückes (10) als Teilflächen eines Zylindermantels ausgeführt sind.

6. Synchronisiereinrichtung nach Anspruch 1,
**dadurch gekennzeichnet, daß**
die Ausnehmung (32) im Synchronkörper zwei Auflageflächen aufweist, wobei die erste Auflagefläche parallel der einen Anlagefläche (30) des Druckstückes (10) und die zweite Auflagefläche parallel der anderen Anlagefläche (31) ist.

## Claims

1. Synchronizing device (4) for change-speed gearboxes, having a synchronizing body (5) which is arranged fixedly in terms of rotation on a gearbox shaft (1) and has an external toothing system (7) and a plurality of uniformly distributed longitudinal grooves on the circumference, an internal toothing system (8) of a slider sleeve (9) engaging into the external toothing system (7) of the synchronous body (5) and pressure pieces (10) engaging into the longitudinal grooves, a latching element (12) which is prestressed by a compression spring (11), is preferably spherical and interacts with a recess (13) of the slider sleeve (9) protruding over a radially outer face of each pressure piece (10) which is introduced into the synchronous body (5), the pressure piece (19), the compression spring (11) and the latching element (12) forming a structural unit by the pressure piece (10) holding the compression spring (11) and the latching element (12) together, and the pressure pieces (10) interacting with at least one synchronous ring (14, 15) which has a conical friction face (18, 19) and a locking toothing system (16, 17), **characterized in that** at least one pressure piece (10) has a central bearing which points radially inwards and is formed by contact faces (30, 31) which are arranged at an oblique angle with respect to one another, the central bearing engaging into a recess (32) which is arranged on the synchronous body (5) in the neutral position of the synchronizing device (4).

2. Synchronizing device according to Claim 1, **characterized in that** the bearing faces (30, 31) of the central bearing have a conical shape at least in sections.

3. Synchronizing device according to Claim 2, **characterized in that**, if the bearing faces (30, 31) of the central bearing are of conical configuration, the recess (32) on the synchronous body has an edge which is circular at least in sections.

4. Synchronizing device according to Claim 1, **characterized in that** two sliding faces (35) and (36) are arranged on the pressure piece (10) on the radial outer contact face between the pressure piece (10) and the slider sleeve (9), which sliding faces (35) and (36) are at the same inclination as the bearing faces (30) and (31), in each case the radially inner and outer faces which are arranged on the pressure piece (10) in an opposed manner in the axial direction being parallel.

5. Synchronizing device according to Claim 1, **characterized in that** the central bearing has at least partially the shape of a section of a cylinder roll, the bearing faces (30, 31) of the pressure piece (10) being configured as part faces of a cylinder surface.

6. Synchronizing device according to Claim 1, **characterized in that** the recess (32) in the synchronous body has two bearing faces, the first bearing face being parallel to, one bearing face (30) of the pressure piece (10) and the second bearing face being parallel to the other bearing face (31).

## Revendications

1. Dispositif de synchronisation (4) pour des boîtes de changement de vitesses comprenant un corps de synchronisation (5) disposé fixe en rotation sur un arbre de transmission (1), qui présente sur sa périphérie une denture extérieure (7) et plusieurs rainures longitudinales réparties uniformément, une denture intérieure (8) d'un manchon coulissant (9) venant en prise dans la denture extérieure (7) du corps de synchronisation (5) et des pièces de pression (10) venant en prise dans les rainures longitudinales, un élément d'encliquetage (12) précontraint par un ressort de compression (11), de préférence de forme sphérique, coopérant avec un évidement (13) du manchon coulissant (9) dépassant d'une surface radialement extérieure de chaque pièce de pression (10) insérée dans le corps de synchronisation (5), la pièce de pression (10), le ressort de compression (11) et l'élément d'encliquetage (12) formant une unité constructive par le fait que la pièce de pression (10) retient ensemble le ressort de compression (11) et l'élément d'encliquetage (12), et les pièces de pression (10) coopérant avec au moins une bague de synchronisation (14, 15) présentant une surface de friction conique (18, 19) et une denture de blocage (16, 17),
**caractérisé en ce que**
au moins une pièce de pression (10) présente un support de palier de centrage tourné radialement vers l'intérieur, qui est formé par des faces d'appui (30, 31) disposées suivant un angle obtus l'une par rapport à l'autre, le support de palier de centrage venant en prise dans un évidement (32) prévu sur le corps de synchronisation (5) dans la position neutre du dispositif de synchronisation (4).

2. Dispositif de synchronisation selon la revendication 1,
**caractérisé en ce que**
les faces d'appui (30, 31) du support de palier de centrage présentent au moins en partie une forme conique.

3. Dispositif de synchronisation selon la revendication 2,
**caractérisé en ce que**
lorsque les faces d'appui (30, 31) du support de palier de centrage ont une forme conique, l'évidement (32) présente sur le corps de synchronisation un bord au moins en partie circulaire.

4. Dispositif de synchronisation selon la revendication 1,
**caractérisé en ce que**
deux faces de glissement (35) et (36) sont disposées sur la pièce de pression (10) sur la surface de contact radialement extérieure entre la pièce de pression (10) et le manchon coulissant (9), lesquelles présentent la même inclinaison que les faces d'appui (30) et (31), les faces radialement intérieure et extérieure respectives qui sont disposées de manière opposée dans la direction axiale sur la pièce de pression (10) étant parallèles.

5. Dispositif de synchronisation selon la revendication 1,
**caractérisé en ce que**
le support de palier de centrage présente au moins en partie la forme d'une portion de rouleau cylindrique, les faces d'appui (30, 31) de la pièce de pression (10) étant réalisées sous forme de faces partielles d'une enveloppe cylindrique.

6. Dispositif de synchronisation selon la revendication 1,
**caractérisé en ce que**
l'évidement (32) dans le corps de synchronisation présente deux faces de support, la première face de support étant parallèle à une face d'appui (30) de la pièce de pression (10) et la deuxième face de support étant parallèle à l'autre face d'appui (31) .
